# EUROPEAN PATENT APPLICATION

(11) **EP 3 471 350 A1**
(43) Date of publication of application: **17.04.2019**
(21) Application number: 16904638.0
(22) Date of filing: 09.06.2016
(51) Int. Cl.: H04L 12/717, H04L 12/24, H04W 72/04, H04L 12/715

(54) **VIRTUAL NETWORK MANAGEMENT APPARATUS, VIRTUAL NETWORK MANAGEMENT METHOD, AND PROGRAM**

(71) Applicant: NEC Corporation, Tokyo 108-8001 (JP)
(72) Inventor: SENJU, Masatoshi, Tokyo 108-8001 (JP); SUGANO, Yuka, Tokyo 108-8001 (JP); TOMOBE, Minoru, Tokyo 108-8001 (JP); SASAKI, Shinobu, Hachioji-shi Tokyo 192-0363 (JP); SHIMOMA, Masashi, Hachioji-shi Tokyo 192-0363 (JP)
(74) Representative: Reeve, Nicholas Edward
(86) International application number: PCT/JP2016/067215
(87) International publication number: WO 2017/212603

(57) **Abstract**

The present invention improves accuracy of resource allocation when a plurality of virtual networks are constructed. A virtual network management apparatus includes first means for causing shared nodes on a common base of computer resources to operate as virtual nodes on the plurality of virtual networks, second means for collecting load status(es) of the shared nodes, and third means for instructing a change in a resource amount of at least one of the shared nodes, based on the load status(es) of the shared nodes.

## Description

### FIELD

The present invention relates to a virtual network management apparatus, a virtual network management method, and a program. More specifically, the invention relates to a virtual network management apparatus, a virtual network management method, and a program for managing communication network nodes disposed on a plurality of virtual networks.

### BACKGROUND

In recent years, communication traffic has rapidly increased due to spread of smartphones and smart devices. It is also estimated that communications referred to as IoT (Internet of Things) and M2M (Machine to Machine) will increase, so that it is inevitable that the communication traffic will further increase. Due to the increase in the communication traffic, facility enhancement of a network node configured to process the communication traffic becomes important.

Patent Literature 1 discloses a technology for generating a virtual call processing node in a mobile communication system including one or more physical servers each configured to implement the virtual call processing node, based on a processing amount of communication processing for each physical server. More specifically, Patent Literature 1 describes reservation of resources that become necessary for the communication processing and enhancement of facility use efficiency, by generating the virtual call processing node based on the processing amount of the communication processing for each physical server.

Non-Patent Literature 1 is white paper on Network Functions Virtualization (NFV; "network functions virtualization") related to an embodiment of the present invention. Non-Patent Literature 2 is a material explaining an NFV architecture framework.

### CITATION LIST

### PATENT LITERATURE

[PTL 1] JP Patent No. 5537600

### NON-PATENT LITERATURE

[NPL 1] European Telecommunications Standards Institute (ETSI), "Network Functions Virtualisation - Update White Paper", [online], [searched on May 27, 2016], Internet <URL: https://portal.etsi.org/NFV/NFV_White_Paper2.pdf>
[NPL 2] European Telecommunications Standards Institute (ETSI), "Network Functions Virtualization; Architectural Framework (ETSI GS NFV 002)", [online], [searched on May 27, 2016], Internet <URL: http://www.etsi.org/deliver/etsi_gs/nfv/001_099/002/01.01.01_60/gs_n fv002v010101p.pdf>

### SUMMARY

### TECHNICAL PROBLEM

The following analysis has been given by the present invention. By employing OpenFlow and SDN (Software-Define Networking) that are used in Patent Literature 1, a physical network can be sliced to construct a plurality of virtual networks. By applying the technology in Patent Literature 1 in these virtual networks as well, it becomes possible to accommodate the increase in the communication traffic.

However, if an M2M device or an IoT device is connected to each of the plurality of virtual networks, burst traffic such as simultaneous transmission of sensor data at a certain time may occur. If resource allocation is not appropriately performed in this case, a processing delay or the like may occur in one or more of the virtual networks. Further, a change in communication traffic and a change in a processing amount in each of the plurality of virtual networks may not necessarily tend to be the same. To take an example, even if the communication traffic has increased in one of two virtual networks, the communication traffic and the processing amount may have decreased in the other of the two virtual networks. Then, whole communication traffic and a whole processing amount may remain unchanged.

An object of the present invention is to provide a virtual network management apparatus, a virtual network management method, and a program that can contribute accuracy of resource allocation (also referred to as provisioning) to a shared node when a plurality of virtual networks are constructed.

### SOLUTION TO PROBLEM

According to a first aspect, there is provided a virtual network management apparatus comprising:
first means for causing shared nodes on a common base of computer resources to operate as virtual nodes on a plurality of virtual networks;
second means for collecting load status(es) of the shared nodes; and
third means for instructing a change in a resource amount of at least one of the shared nodes, based on the load status(es) of the shared nodes.

According to a second aspect, there is provided a virtual network management method by a virtual network management apparatus configured to cause shared nodes on a common base of computer resources to operate as virtual nodes on a plurality of virtual networks, the method comprising steps of:
collecting load status(es) of the shared nodes; and
instructing a change in a resource amount of at least one of the shared nodes, based on the load status(es) of the shared nodes. This method is linked to a specific machine that is the virtual network management apparatus configured to operate a communication network node, using a virtual machine.

According to a third aspect, there is provided a program configured to cause a computer comprising a virtual network management apparatus configured to cause shared nodes on a common base of computer resources to operate as virtual nodes on a plurality of virtual networks, the program comprising:
a process of collecting load status(es) of the shared nodes; and
a process of instructing a change in a resource amount of at least one of the shared nodes, based on the load status(es) of the shared nodes. This program can be stored in a computer readable (non-transient) storage medium. That is, the present invention can also be embodied as a computer program product.

### ADVANTAGEOUS EFFECTS OF INVENTION

According to the present invention, it becomes possible to improve accuracy of resource allocation when the plurality of networks are constructed.

### BRIEF DESCRIPTION OF DRAWINGS

Fig. 1 is a diagram illustrating a configuration of one exemplary embodiment of the present invention.
Fig. 2 is a diagram for explaining an operation of the one exemplary embodiment of the present invention.
Fig. 3 is a diagram for explaining an operation of the one exemplary embodiment of the present invention.
Fig. 4 is a diagram illustrating an overall configuration of a first exemplary embodiment of the present invention.
Fig. 5 is a diagram illustrating a configuration example of a server that is disposed on a cloud in the first exemplary embodiment of the present invention.
Fig. 6 is a diagram illustrating a configuration example of a VNF that is disposed on the cloud in the first exemplary embodiment of the present invention.
Fig. 7 is a diagram illustrating a configuration example of a control part in the server in Fig. 5.
Fig. 8 is a diagram illustrating a configuration example of a controller in the first exemplary embodiment of the present invention.
Fig. 9 is a table illustrating an example of load status information of each shared node that is managed by a load status storage part of the controller in the first exemplary embodiment of the present invention.
Fig. 10 is a diagram for explaining a cooperative operation between the controller in the first exemplary embodiment and the server in Fig. 5.
Fig. 11 is a sequence diagram illustrating operations in the first exemplary embodiment of the present invention.
Fig. 12 is a diagram illustrating a configuration of a radio network for a second exemplary embodiment of the present invention.
Fig. 13 is a diagram illustrating an example where the radio network in Fig. 12 is configured with VNFs.
Fig. 14 is a diagram illustrating two radio networks configured by an NFV MANO in the second exemplary embodiment of the present invention.
Fig. 15 is a flow diagram illustrating operations of the NFV MANO in the second exemplary embodiment of the present invention.

### DESCRIPTION OF EMBODIMENTS

First, an overview of one exemplary embodiment of the present invention will be described with reference to the drawings. A reference numeral in the drawings given in this overview is given to each element, for convenience, as an example for helping understanding, and does not intend to limit the present invention to modes illustrated.

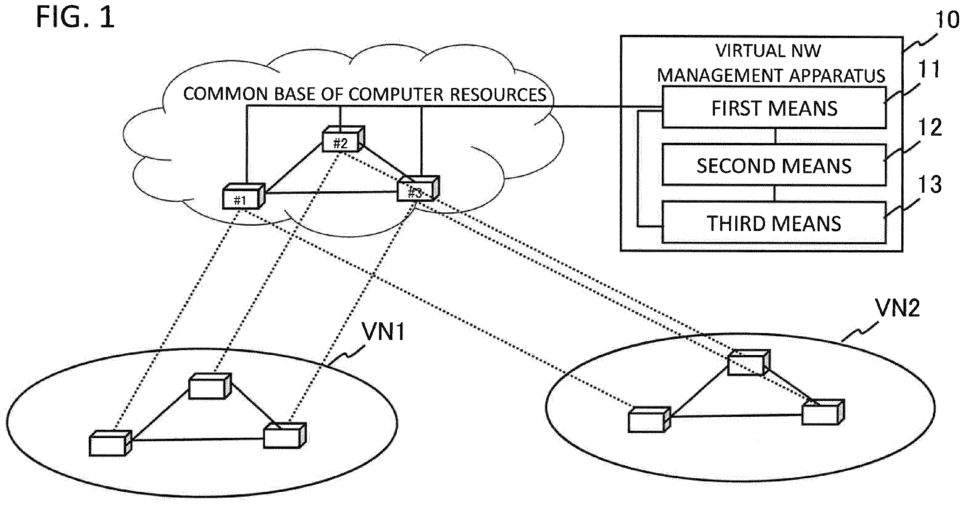

The one exemplary embodiment of the present invention can be implemented by a virtual network management apparatus including first means 11 to third means 13, as illustrated in Fig. 1. More specifically, the first means 11 causes shared nodes on a common base of computer resources to operate as virtual nodes on a plurality of virtual networks. In the example in Fig. 1, for example, the first means 11 causes shared nodes #1 to #3 on the common base of the computer resources to operate as the virtual nodes on virtual networks VN1 and VN2.

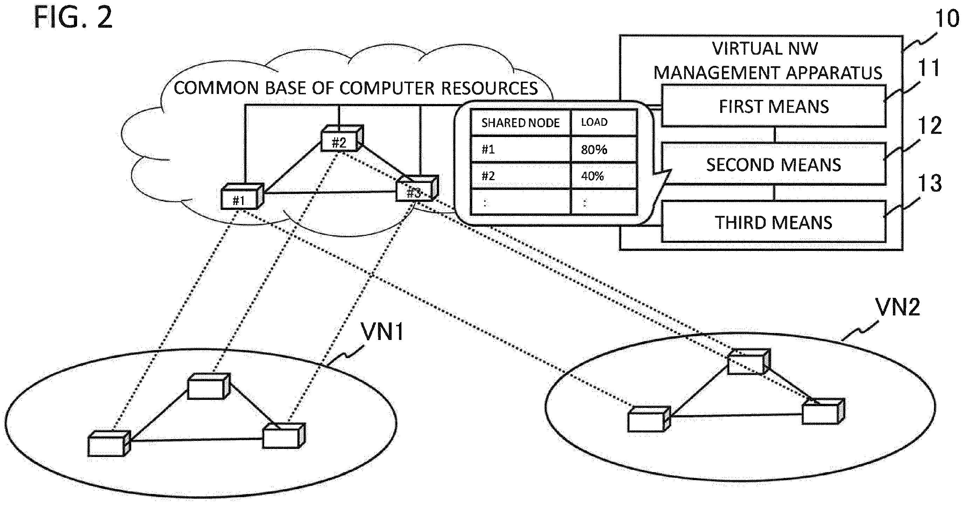

The second means 12 collects load statuses of the shared nodes #1 to #3 on the common base of the computer resources. To take an example, the second means 12 collects the respective load statuses of the shared nodes #1 to #3 on the common base of the computer resources, as illustrated in Fig. 2. As a method of collecting the load statuses, the second means 12 may directly collect the load statuses from the shared nodes #1 to #3, or may obtain the load statuses from a load monitoring apparatus configured to monitor respective loads of the shared nodes #1 to #3.

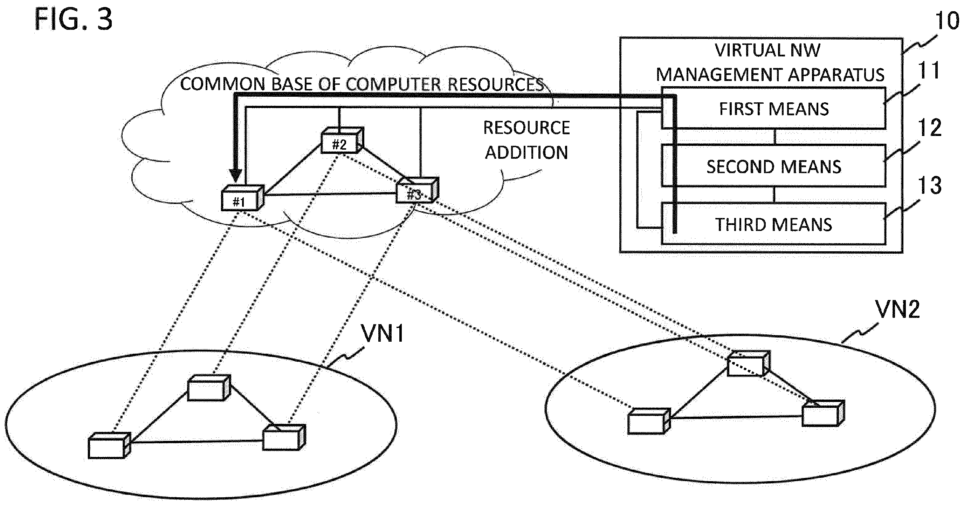

The third means 13 instructs a change in a resource amount of at least one of the shared nodes, based on the load statuses of the shared nodes that have been collected by the second means 12. To take an example, as illustrated in Fig. 3, the third means 13 instructs resource addition of the shared node #1 whose value indicating the load status is high (in a case where a large value indicates a high load). Similarly, the third means 13 may instruct resource reduction of the shared node #2 whose value indicating the load status is low or to which resources are excessively allocated.

According to the virtual network management apparatus configured as mentioned above, resource allocation to each communication network node can be optimized according to communication traffic or a processing amount when the plurality of virtual networks are constructed. The reason for the optimization of the resource allocation is that a configuration has been employed in which the change in the resource amount of the at least one of the shared nodes is instructed, based on the load statuses of the shared nodes assigned to the virtual nodes on the plurality of virtual networks.

### [First Exemplary Embodiment]

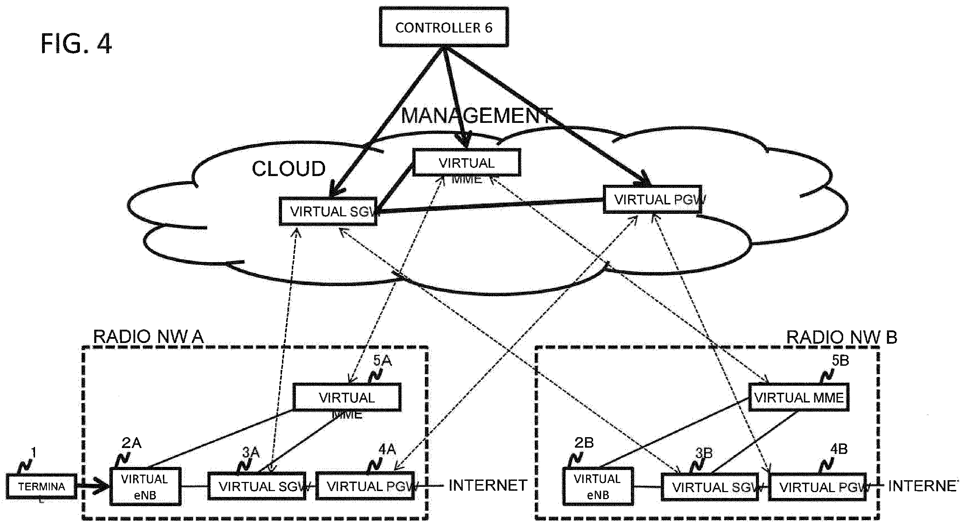

Subsequently, a first exemplary embodiment of the present invention will be described in detail with reference to the drawings. Fig. 4 is a diagram illustrating an overall configuration of the first exemplary embodiment. In this exemplary embodiment, the description will be given, using an example where the present invention is applied to an LTE (Long Term Evolution) communication system. A network to which the present invention can be applied is not, however, limited to the example in Fig. 4.

Referring to Fig. 4, there are illustrated a controller 6 configured to integrally manage shared nodes such as a virtual SGW (Serving Gateway), a virtual PGW (Packet Data Network Gateway), and a virtual MME (Mobility Management Entity) disposed on a cloud and two radio networks A and B each configured to provide a service, using the shared nodes that have been virtually configured by this controller 6.

In the example in Fig. 4, a terminal 1 (UE: User Equipment) performs communication with an external network such as the Internet via a virtual base station (virtual eNB) and via a virtual SGW, a virtual PGW, and a virtual MME on a core network.

The terminal 1 comprises an apparatus such as a cellular phone, a PC (Personal Computer), a mobile router, a smart device (e.g., a smart meter configured to monitor power consumption in a house, a smart television, or a wearable terminal), or an M2M (Machine to Machine) device. The smart device and the M2M device are also referred to as IoT devices, and the IoT devices include, for example, industrial equipment, a vehicle, health care equipment, a household appliance, and so on, in addition to the above-mentioned devices.

A virtual base station (eNB) 2A, a virtual SGW 3A, a virtual PGW 4A, and a virtual MME 5A are disposed on the radio network A. Each two-way arrow line in Fig. 4 indicates a correspondence relationship between the virtual node on the radio network and one of the shared nodes on the cloud. In the example in Fig. 4, the virtual SGW 3A, the virtual PGW 4A, and the virtual MME 5A of these nodes are implemented by the shared nodes configured to operate on the cloud.

Similarly, a virtual base station (eNB) 2B, a virtual SGW 3B, a virtual PGW 4B, and a virtual MME 5B are disposed on the radio network B as well. The virtual SGW 3B, the virtual PGW 4B, and the virtual MME 5B of these nodes are implemented by the shared nodes configured to operate on the cloud.

Each of the virtual base stations 2A and 2B includes a function (U-Plane function) of executing data communication with the terminal 1 based on a PDCP (Packet Data Convergence Protocol), for example, in addition to a function (C-Plane function) of processing control signaling for radio resource management. C-Plane and U-Plane that will be described below are respectively abbreviations for Control Plane and User Plane.

In addition to functioning as an anchor point for terminal mobility, each of the virtual SGWs 3A and 3B includes a function (User-Plane function) of processing a packet and a function (C-Plane function) of processing control signaling, for example.

In addition to functioning as a contact point with the external network, each of the virtual PGWs 4A and 4B includes a function (User-Plane function) of processing a packet, a function (PCEF: Policy and Charging Enforcement Function) of managing a charging state according to a communication, a function (PCRF: Policy and Charging Rule Function) of controlling a policy such as QoS, a lawful interception (LI: Lawful Interception) function for intercepting a communication, and so on.

Each of the virtual MMEs 5A and 5B performs signaling control and bearer management between the terminal and the core network. Specifically, each of the virtual MMEs 5A and 5B includes a function (C-Plane function) of setting and releasing a communication session and processing control signaling such as handover control and a function of managing subscriber information of a communication system, in cooperation with an HSS (Home Subscriber Server).

The reason why the virtual SGWs 3A and 3B, the virtual PGWs 4A and 4B, and the virtual MMEs 5A and 5B are disposed on the side of the cloud in the first exemplary embodiment is that there is small need for disposing the virtual SGWs 3A and 3B, the virtual PGWs 4A and 4B, and the virtual MMEs 5A and 5B close to the terminal 1 and efficient management can be performed when dynamic scaling out/in on the side of the cloud under control of the controller 6 is performed. Naturally, all of the virtual SGWs 3A and 3B, the virtual PGWs 4A and 4B, and the virtual MMEs 5A and 5B do not have to be disposed on the side of the cloud, and functions other than those of these virtual SGWs 3A and 3B, virtual PGWs 4A and 4B, and virtual MMEs 5A and 5B may be disposed on the side of the cloud.

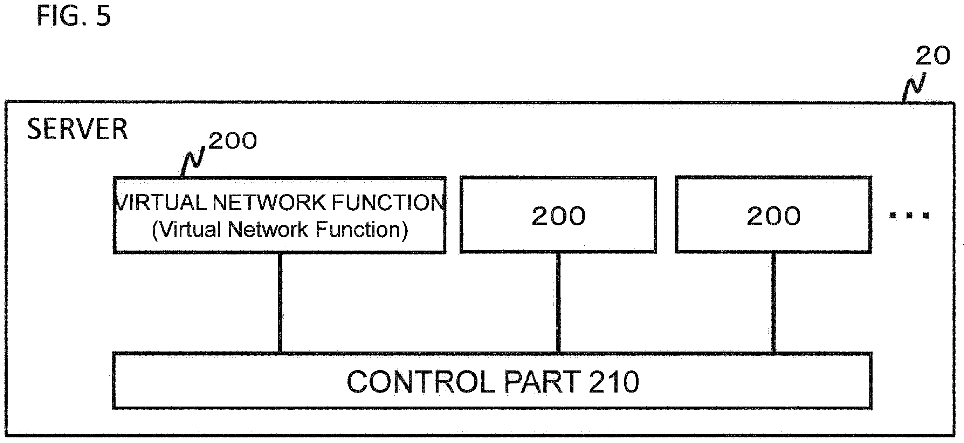

Fig. 5 is a diagram illustrating a configuration example of a server that is disposed on the cloud in the first exemplary embodiment of the present invention. As illustrated in Fig. 5, a server 20 includes a control part 210 and virtual network functions (VNFs: Virtual Network Functions) 200, for example. An apparatus that virtualizes any shared node on the cloud is not limited to the server 20, and may be a router, for example.

The control part 210 can operate, on a virtual machine, a network function to be executed by each shared node, as a VNF 200. In this exemplary embodiment, the VNFs 200 can be operated as the virtual SGW, the virtual PGW, the virtual MME, and the like, for example. The functions that can be operated by the control part 210 on virtual machines, however, are not limited to these examples.

The control part 210 may be configured by control software such as a hypervisor (Hypervisor), which can execute computer virtualization.

The control part 210 can forward, to VNFs 200, a signal received from each of the radio networks A and B and can cause the VNFs to execute signal processing according to the function of the VNFs 200. The control part 210 performs a process of returning a signal output from VNFs 200 to each of the radio networks A and B. As the signal to be input to or output from VNFs, communication data (such as a packet) that is transmitted or received via a bearer, a message that is transmitted or received by a network node, or the like may be pointed out. By using the server 20 as mentioned above, the shared nodes on the cloud can be operated as the virtual SGWs 3A and 3B, the virtual PGWs 4A and 4B, and the virtual MMEs 5A and 5B on the radio networks A and B.

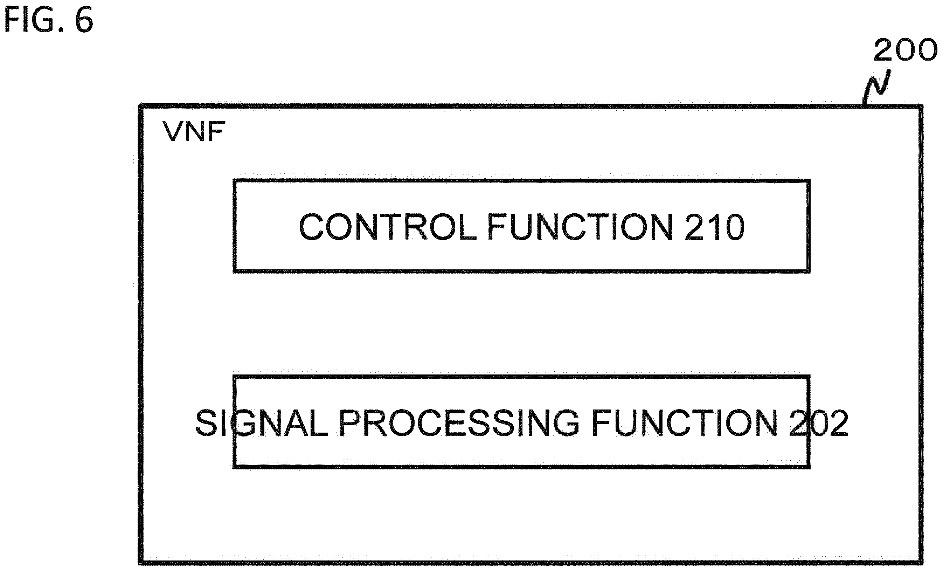

Fig. 6 illustrates a configuration example of a VNF 200 configured by the above-mentioned server 20. In the example in Fig. 6, the VNF 200 includes a control function 201 and a signal processing function 202.

The control function 201 includes a function equivalent to the so called C-Plane. The C-Plane includes a function of processing a control signal that is transmitted in the communication system. The signal processing function 202 includes a function equivalent to the so called U-Plane. The U-Plane includes a function of processing data that is transmitted in the communication system. Accordingly, the control function 201 and the signal processing function 202 respectively include functions equivalent to those of a control part and a signal processing part included in each of a common SGW, a common PGW, and a common MME.

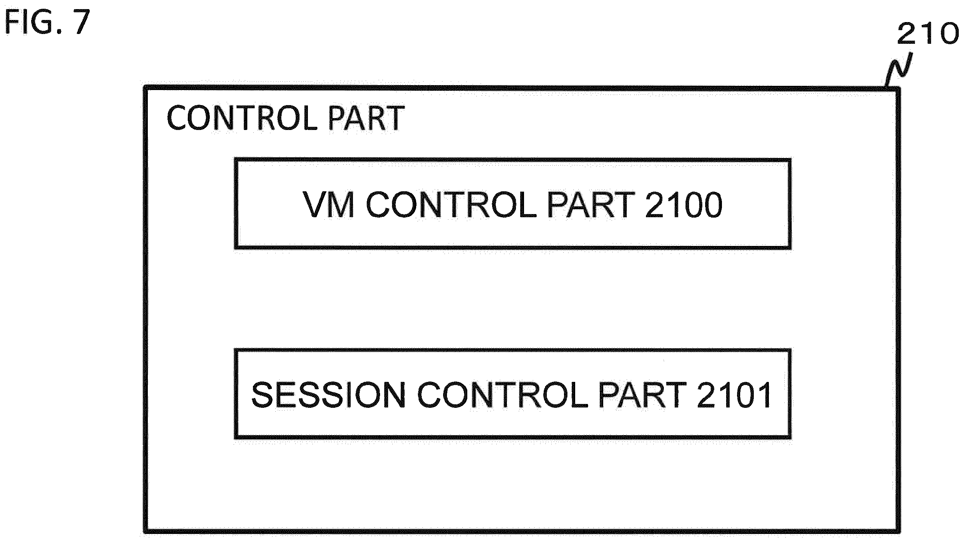

Fig. 7 is a diagram illustrating a configuration example of the control part in the above-mentioned server 20. Referring to Fig. 7, the control part 210 includes a VM (Virtual Machine) control part 2100 and a session control part 2101, for example.

The VM control part 2100 controls the virtual machine for operating the VNF 200 associated with the signal processing to be executed by each shared node that operates on the cloud. The VM control part 2100 can execute at least one of activation, deletion, and stop of the virtual machine, for example. The VM control part 2100 can also cause migration of the virtual machine being operated to a different virtual machine, for example.

The VM control part 2100 controls the activation, the stop, the migration, and so on of the virtual machine, in response to a request from the controller 6. To take an example, the VM control part 2100 dynamically execute the activation, the stop, the migration, and so on of the virtual machine, in response to a request from the controller 6. The VM control part 2100 can also control the activation, the stop, the migration, and so on, according to the status of the communication system. To take an example, the VM control part 2100 dynamically executes the activation, the stop, the migration, and so on of the virtual machine, according to the communication amount and the congestion status of the communication system, the load of the server 20, and so on.

The session control part 2101 can forward a received signal to the VNF 200 associated with the signal. The session control part 2101 can forward a signal issued by each VNF 200 to an address associated with the signal. That is, in this exemplary embodiment, the controller 6 and the server 20 configured to operate upon receipt of an instruction of the controller 6 function as the above-mentioned first means 11.

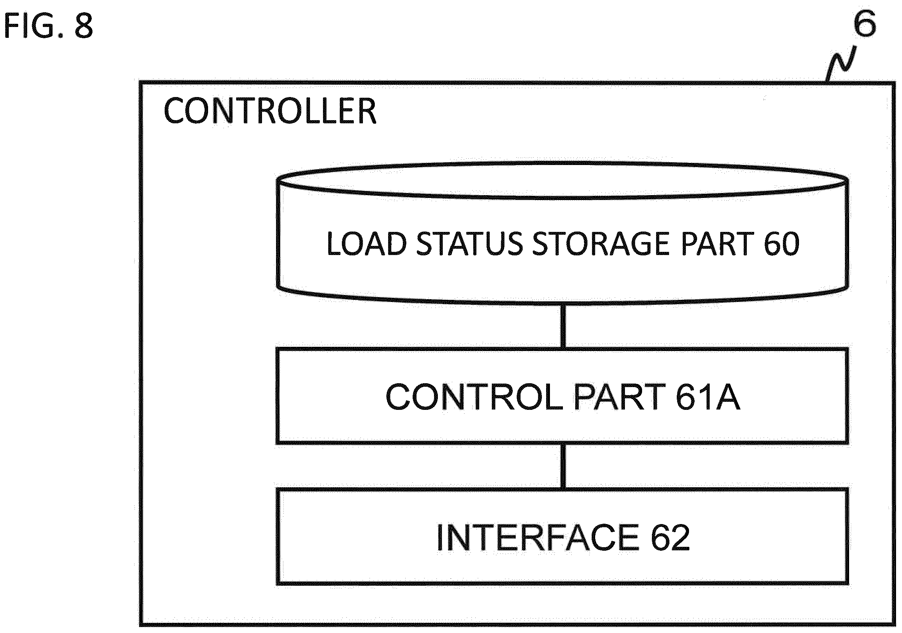

Subsequently, a description will be directed to the controller 6 configured to function as the second means 12 and the third means 13 in this exemplary embodiment, which have been mentioned above. Fig. 8 is a diagram illustrating a configuration example of the controller 6 in the first exemplary embodiment. Referring to Fig. 8, a configuration including a control part 61A, an interface 62, and a load status storage part 60 is illustrated.

The interface 62 is an interface for communicating with each node on the cloud. The controller 6 can communicate with each shared node such as the virtual SGW, the virtual PGW, or the virtual MME on the cloud, via the interface 62, using a predetermined protocol. The controller 6 collects a load status from each shared node on the cloud via the interface 62, for example.

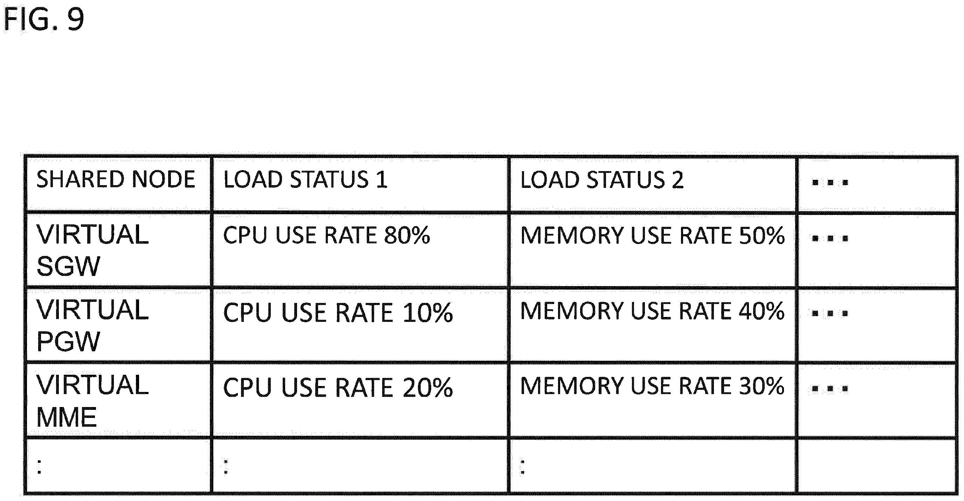

The load status storage part 60 stores the load status(es) collected from shared node(s), for example. Fig. 9 is a table illustrating an example of load status information that is managed by the load status storage part 60. In the example in Fig. 9, a CPU use rate and a memory use rate are stored for each shared node, as the load status information. As the CPU use rate and the memory use rate, a virtual CPU use rate and a virtual memory use rate of the virtual machine corresponding to each shared node can be used. Naturally, information indicating a different load status such as a traffic amount may be obtained, in place of the CPU use rate and the memory use rate.

The control part 61A computes a resource amount necessary for a service indicator indicating performance of each of the radio networks A and B to satisfy a predetermined condition, based on the load status collected from each shared node. To take an example, the control part 61A computes a resource amount whereby a processing delay in each of the radio networks A and B becomes a predetermined threshold value or less (satisfies an allowable level). A different value may be set for each of the radio networks A and B, as the predetermined threshold value, for example (so that the radio network A allows a certain delay while the radio network B allows no delay, for example). When the service indicator indicating the performance of each of the radio networks A and B exceeds a predetermined upper limit value, or resources are excessively allocated, the control part 61A computes a resource amount to be reduced from one or more of the shared nodes. In the above-mentioned example, a processing delay amount in each of the radio networks A and B is used as the service indicator for each virtual network. The service indicator for each virtual network, however, is not limited to the "delay". To take an example, an effective forwarding rate (bandwidth) or various indicators indicating reliability can also be used. Alternatively, in place of the service indicators, loads and target load values of the shared nodes and the virtual nodes on the virtual networks (radio networks A and B) may be compared to compute necessary resources.

The control part 61A of the controller 6 includes a function of executing resource provisioning for one or more of the shared nodes disposed on the cloud, based on the resource amount that has been computed. Specifically, the control part 61A requests the server 20 configured to operate the virtual machines to change allocation amounts of resources (such as server resource, CPU resource, and network resource) for the one or more of the shared nodes, based on the resource amount that has been computed, for example. The control part 61A requests resource additional allocation for the virtual MME, based on the resource amount of the virtual MME that has been computed, for example.

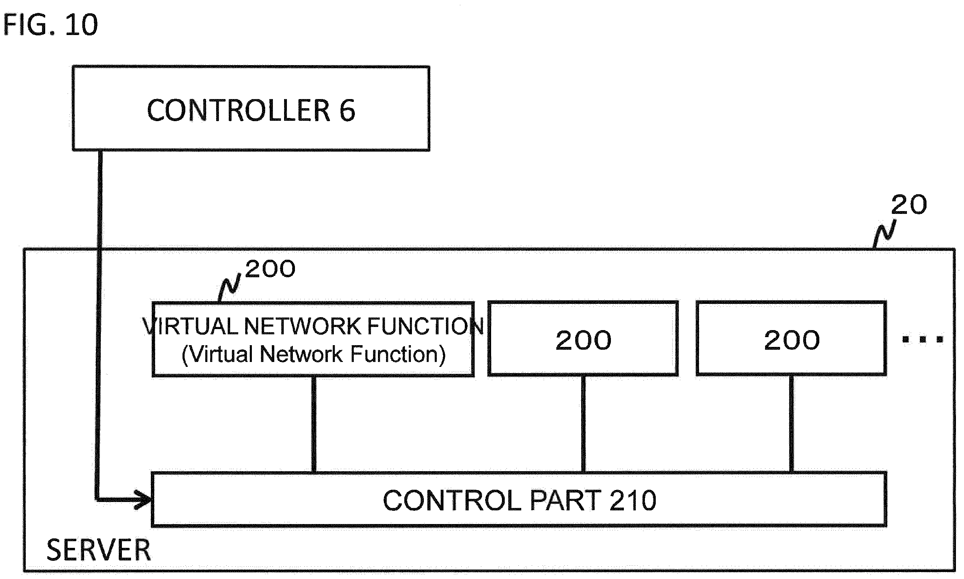

Fig. 10 is a diagram for explaining a cooperative operation between the controller 6 in the first exemplary embodiment of the present invention and the server in Fig. 5. As illustrated in Fig. 10, the controller 6 requests the control part 210 of the server 20 that virtualizes shared node(s) on the cloud to perform provisioning of resources (such as the server resource, the CPU resource, and the network resource) for the one or more of the shared nodes that are implemented with the VNFs. When there are a plurality of the servers 20 that virtualize the shared nodes on the cloud, the controller 6 requests each of these plurality of servers to perform resource provisioning for one or more of the shared nodes that these plurality of servers visualize. To take an example, based on resource amounts of the virtual SGW and the virtual MME, the control part 61A requests the server 20 configured to operate the virtual machine associated with each of these shared nodes to change resource allocation amounts.

The control part 210 of the server 20 performs resource allocation changes for the one or more of the shared nodes implemented with the VNFs, in response to the request from the control part 61A of the controller 6. To take an example, the control part 210 allocates a resource amount requested from the control part 61A to the virtual MME implemented with the VNF.

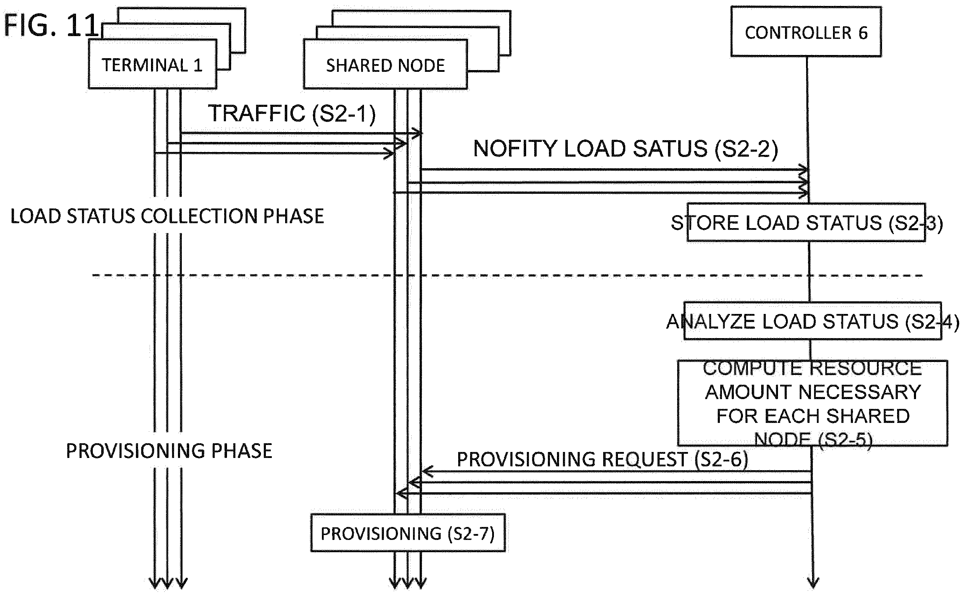

Fig. 11 is a sequence diagram illustrating operations in the first exemplary embodiment of the present invention. Referring to Fig. 11, a communication part 11 of the terminal 1 first executes communication with the shared nodes (traffic in S2-1). Specifically, the communication part 11 of the terminal 1 transmits traffic of a control signal and/or user data to the shared node(s). Alternatively, shared node(s) may transmit the traffic of the control signal and/or the user data to a different shared node. To take an example, the virtual SGW transmits the traffic of the control signal to the virtual MME.

The control function 201 of each shared node configured with the VNF notifies a load status of its own apparatus to the controller 6 (step S2-2). The control function 201 notifies the load status of its own apparatus to the controller 6 at a predetermined timing, for example. Preferably, this predetermined timing is a frequency with which periodical traffic to be transmitted from the terminal 1 that is the smart device, the M2M device, or the like can be captured. When the smart device or the M2M device transmits sensor data hourly every day, the load status is transmitted at intervals whereby the periodic traffic to occur hourly can be grasped.

The control part 61A of the controller 6 accumulates, in the load status storage part 60, the load status of each shared node that has been notified (step S2-3). The above-mentioned steps S2-1 to S2-3 constitute a load status collection phase.

The control part 61A of the controller 6 analyzes the load status of each shared node accumulated in the load status storage part 60 (step S2-4), and computes a resource amount necessary for each shared node (step S2-5).

The control part 61A of the controller 6 requests the server 20 that configures each of the shared nodes with the VNF to perform resource allocation for one or more of the shared nodes, based on the resource amount computed by the control part 61A (provisioning request in step S2-6). To take an example, the control part 61A requests the server 20 to perform resource allocation for the virtual MME, based on the resource amount of the virtual MME computed by the control part 61A.

In response to the request from the controller 6, the control part 210 of the server 20 allocates to the one or more of the shared nodes a resource amount based on the request (provisioning in S2-7). To take an example, in response to the request from the controller 6, the control part 210 allocates to the virtual MME the resource amount based on the request.

As mentioned above, in the first exemplary embodiment, the controller 6 integrally manages each shared node disposed on the cloud so that the shared node(s) operates as the virtual node(s) on each of a plurality of radio NWs. Then, the controller 6 computes the resource amount necessary for the shared node(s), based on the load status(es) of these shared nodes. Further, the controller 6 requests the server 20 that configures each shared node with the VNF to change resource amount allocation for one or more of the shared nodes configured with the VNFs. The server 20 performs the change of the resource amount allocation for the one or more of the shared nodes, based on the request.

Accordingly, in the first exemplary embodiment, it becomes possible to perform integral management and provisioning for the virtual nodes configured to operate on the plurality of radio NWs. By reinforcing resources against burst traffic in advance by the provisioning, for example, a virtual node processing delay or the like can be prevented beforehand. Further, as explained in the above description, allocation of excessive resources to one or more of the shared nodes is reviewed by the provisioning at any time. Thus, the allocation of the excessive resources is not performed after completion of the burst traffic.

### [Second Exemplary Embodiment]

Subsequently, a description will be directed to a second exemplary embodiment in which an NFV-MANO (NFV Management and Orchestration) apparatus including a VNF management function is disposed, in place of the controller 6 in the first exemplary embodiment.

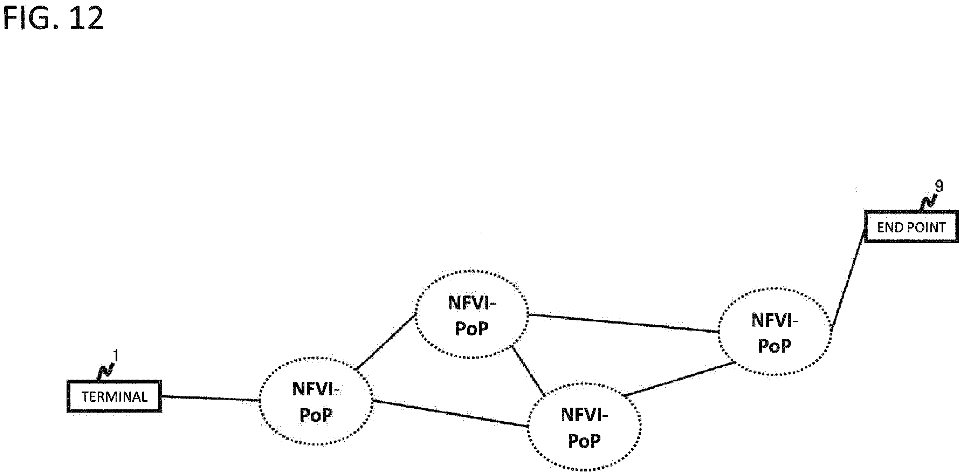

Fig. 12 is a diagram illustrating a configuration of an End-to-End network service illustrated in section 6.2 "Virtualization of Functional Blocks for Network Services" in Non-Patent Literature 2. Each circle drawn by a dotted line in the drawing represents a "Network Function Virtualization Infrastructure Point of Presence (NFVI-PoP) or a physical hardware resource.

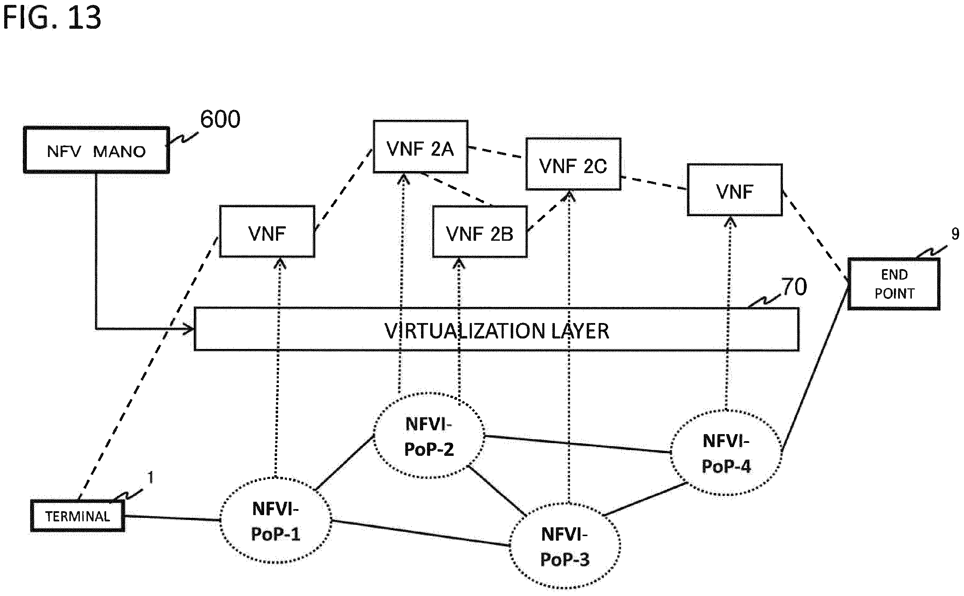

Non-Patent Literature 2 describes virtualization of the End-to-End network service as mentioned above by using NFV-MANO (see Fig. 13).

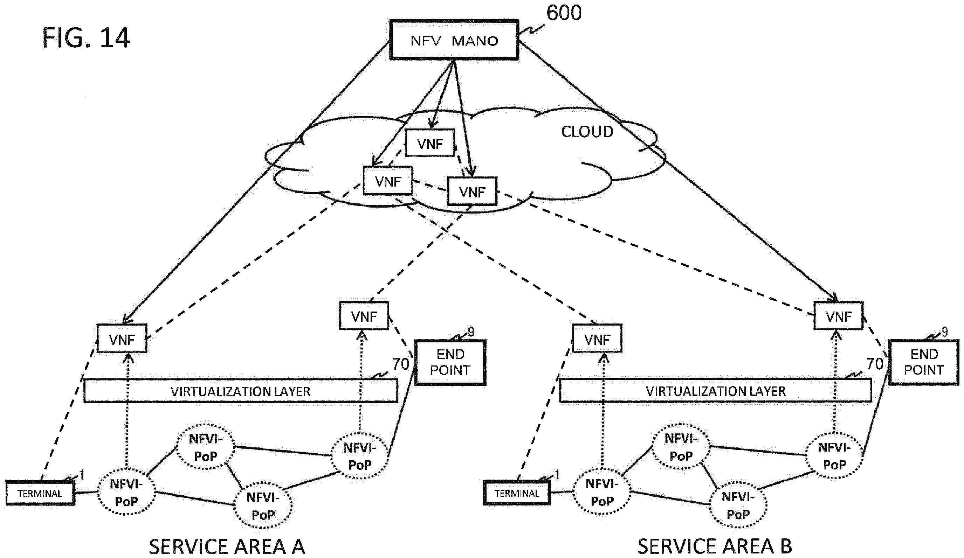

Fig. 14 is a diagram illustrating a configuration of the second exemplary embodiment in which shared nodes (VNFs) are disposed on a cloud by using an HFV-MANO in the second exemplary embodiment of the present invention. The second exemplary embodiment is different from the first exemplary embodiment in that the controller 6 is replaced with an NFV-MANO 600 and that each VNF (shared node) is directly configured by the NFV-MANO 600 via a virtualization layer 70 corresponding to the server 20.

In the example in Fig. 14, like the virtual base stations in the first exemplary embodiment, VNFs that are located close to each terminal 1 and each end point 9 are not disposed on the cloud because of physical position constraints of the VNFs. The NFV-MANO 600 deploys, on the cloud, the VNFs excluding these VNFs and integrally manages the VNFs excluding these VNFs.

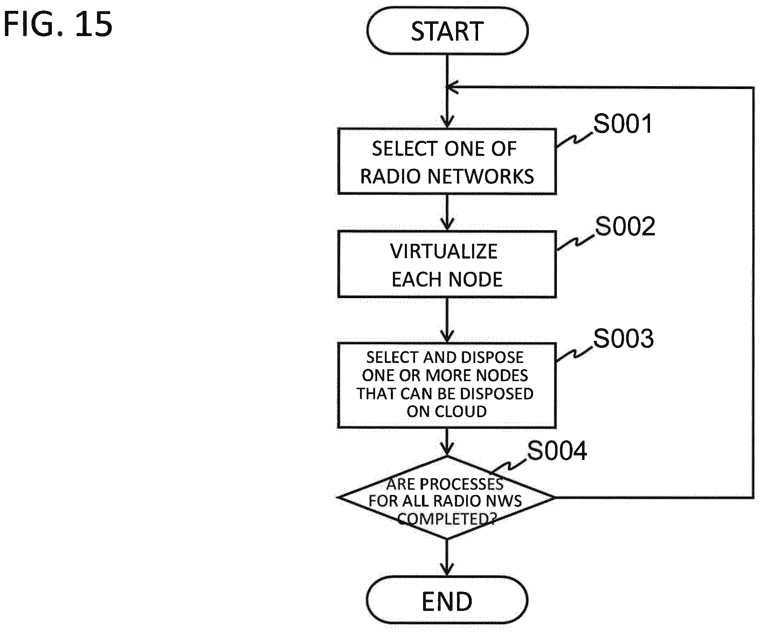

Now, a method of disposing the VNFs as in Fig. 14 will be described. Fig. 15 is a flow diagram illustrating initial operation of the NFV MANO 600 in the second exemplary embodiment. Referring to Fig. 15, the NFV MANO 600 first selects one of radio networks (each corresponding to the configuration of the End-to-End network service in Fig. 12) to be managed (step S001).

Then, the NFV MANO 600 virtualizes each node included in the selected radio network (step S002). To take an example, the NFV MANO 600 virtualizes each MME, each SGW, each PGW, and so on included in the radio network.

Subsequently, the NFV MANO 600 selects, from among each visualized node, one or more nodes that can be disposed on a cloud and disposes the one or more nodes on the cloud (step S003). When a VNF that is already disposed on the cloud and configured to provide a same function as that of the one or more nodes is present on that occasion, the VNF can be used.

By repeating the above-mentioned processes for all the radio networks, disposition of the VNFs illustrated in Fig. 14 is completed (step S004).

Subsequent operations are the same as those in the first exemplary embodiment. The NFV MANO 600 collects the load status of each VNF (shared node) on the cloud, and performs resource provisioning, based on that load status.

As described above, it becomes possible to dispose, on the cloud, each function (VNF) that is common in a plurality of radio NWs and to integrally manage each function and perform provisioning.

The above description has been directed to each exemplary embodiment of the present invention. The present invention, however, is not limited to the above-mentioned exemplary embodiments, and further variation, substitution, and adjustment of each exemplary embodiment are possible within the basic technical concept of the present invention. To take an example, a network configuration, a configuration of each element, and an expression form of each message illustrated in each drawing are an example for helping understanding of the present invention, and are not limited to the configurations illustrated in these drawings.

Each part (processing means) of the virtual network management apparatus and the controller illustrated in each drawing can also be implemented by a computer program configured to cause a computer constituting these apparatuses to execute each process described above, using hardware of the computer.

Finally, preferred modes of the present invention will be summarized.

### [First Mode]

(See the virtual network management apparatus according to the first aspect).

### [Second Mode]

The virtual network management apparatus according to the first mode, wherein
the third means computes a resource amount necessary for a service indicator set in advance for each of the virtual networks to satisfy a predetermined standard, based on the load status(es) of the shared nodes, and instructs the change in the resource amount of each shared node(s) having the resource amount being short.

### [Third Mode]

The virtual network management apparatus according to the first or second mode, wherein
the plurality of virtual networks are a plurality of radio networks whose service provision areas are different; and
the first means generates shared nodes configured to provide a function that is common to the plurality of virtual radio networks and causes the shared nodes to operate as the virtual nodes on the plurality of virtual networks.

### [Fourth Mode]

The virtual network management apparatus according to the third mode, wherein
the second means checks the load status(es) of the shared nodes with a frequency with which periodical traffic to occur on the plurality of virtual radio networks can be detected; and
the third means instructs the change in the resource amount of the at least one of the shared nodes before occurrence of the periodic traffic to occur on the virtual radio networks.

### [Fifth Mode]

The virtual network management apparatus according to any one of the first to fourth modes, wherein
the first means is configured by a virtual network function management apparatus configured to form the shared nodes as a virtual network function.

### [Sixth Mode]

(See the virtual network management method according to the second aspect).

### [Seventh Mode]

(See the program according to the third aspect).

The above-mentioned sixth mode and the mode in Fig. 7 can be developed into the second to fifth modes, like the first mode.

Each disclosure of the above-listed Patent Literature and Non-Patent Literatures is incorporated herein by reference. Modification and adjustment of each exemplary embodiment and each example are possible within the scope of the overall disclosure (including the claims) of the present invention and based on the basic technical concept of the present invention. Various combinations and selections of various disclosed elements (including each element of each claim, each element of each exemplary embodiment and each example, each element of each drawing, and the like) are possible within the scope of the disclosure of the present invention. That is, the present invention naturally includes various variations and modifications that could be made by those skilled in the art according to the overall disclosure including the claims and the technical concept. With respect to a numerical value range described herein in particular, an arbitrary numerical value and a small range included in the numerical value range should be construed to be specifically described even unless otherwise explicitly described.

### REFERENCE SIGNS LIST

1 terminal
2A, 2B virtual base station (eNB)
3A, 3B virtual SGW
4A, 4B virtual PGW
5A, 5B virtual MME
6 controller
9 end point
10 virtual network management apparatus (virtual NW management apparatus)
11 first means
12 second means
13 third means
20 server
60 load status storage part
61A control part
62 interface
200 virtual network function (VNF)
201 control function
202 signal processing function
210 control part
600 NFV MANO
2100 VM control part
2101 session control part
VN1, VN2 virtual network

## Claims

1. A virtual network management apparatus comprising:
first means for causing shared nodes on a common base of computer resources to operate as virtual nodes on a plurality of virtual networks;
second means for collecting load status(es) of the shared nodes; and
third means for instructing a change in a resource amount of at least one of the shared nodes, based on the load status(es) of the shared nodes.

2. The virtual network management apparatus according to claim 1, wherein
the third means computes a resource amount necessary for a service indicator set in advance for each of the virtual networks to satisfy a predetermined standard, based on the load status(es) of the shared nodes, and instructs the change in the resource amount of each shared node(s) having the resource amount being short.

3. The virtual network management apparatus according to claim 1 or 2, wherein
the plurality of virtual networks are a plurality of radio networks whose service provision areas are different; and
the first means generates shared nodes configured to provide a function that is common to the plurality of virtual radio networks and causes the shared nodes to operate as the virtual nodes on the plurality of virtual networks.

4. The virtual network management apparatus according to claim 3, wherein
the second means checks the load status(es) of the shared nodes with a frequency with which periodical traffic to occur on the plurality of virtual radio networks can be detected; and
the third means instructs the change in the resource amount of the at least one of the shared nodes before occurrence of the periodic traffic to occur on the virtual radio networks.

5. The virtual network management apparatus according to any one of claims 1 to 4, wherein
the first means is configured by a virtual network function management apparatus configured to form the shared nodes as a virtual network function.

6. A virtual network management method by a virtual network management apparatus configured to cause shared nodes on a common base of computer resources to operate as virtual nodes on a plurality of virtual networks, the method comprising steps of:
collecting load status(es) of the shared nodes; and
instructing a change in a resource amount of at least one of the shared nodes, based on the load status(es) of the shared nodes.

7. A program configured to cause a computer comprising a virtual network management apparatus configured to cause shared nodes on a common base of computer resources to operate as virtual nodes on a plurality of virtual networks, the program comprising:
a process of collecting load status(es) of the shared nodes; and
a process of instructing a change in a resource amount of at least one of the shared nodes, based on the load status(es) of the shared nodes.
